# EUROPÄISCHE PATENTANMELDUNG

(11) **EP 0 539 738 A2**
(43) Veröffentlichungstag der Anmeldung: **05.05.1993**
(21) Anmeldenummer: 92116599.9
(22) Anmeldetag: 29.09.1992
(51) Int. Cl.: H02G 15/013, H02G 15/007

(54) **Dichtungsband zum Umwickeln eines durch eine Kabeldurchtrittsöffnung hindurchzuführenden Kabels, insbesondere Fernmeldekabels o. dgl. Rundmaterial**

(30) Priorität: 29.10.1991 DE 4135570
(71) Anmelder: STEWING KUNSTSTOFFBETRIEB GmbH, D-46282 Dorsten (DE)
(72) Erfinder: Dehling, Helmut, Dipl.-Ing., W-4270 Dorsten 11 (DE)
(74) Vertreter: Honke, Manfred, Dr.-Ing.

(57) **Zusammenfassung**

Es handelt sich um ein Dichtungsband zum Umwickeln eines Kabels und zur Bildung einer zwischen dem Kabel und einer Kabeldurchtrittsöffnung einzupassenden Dichtung. Um eine rutschfeste Kabellagerung selbst unter Berücksichtigung der regelmäßig auftretenden Axial- und Torsionsbeanspruchungen zu erreichen, ist vorgesehen, daß zumindest die dem Kabel zugewandte Bandinnenseite eine aufgerauhte Oberfläche aufweist. Diese aufgerauhte Oberfläche ist durch vorkragende Reibkörper bzw. Reibzähne gebildet, so daß eine besonders hohe Reibwirkung bzw. Griffigkeit erreicht wird.

## Beschreibung

Die Erfindung betrifft ein Dichtungsband zum Umwickeln eines durch eine Kabeldurchtrittsöffnung hindurchzuführenden Kabels, insbesondere Fernmeldekabels o. dgl. Rundmaterial, zur Bildung einer zwischen dem Kabel und der Kabeldurchtrittsöffnung einzupassenden Dichtung.

Es sind Kabelmuffen zum Verbinden und Abzweigen von Kabeln, insbesondere Fernmeldekabeln bekannt, die ein Muffenrohr und in die Stirnseiten des Muffenrohres eingesetzte Dichtkörper mit Kabeldurchtrittsöffnungen aufweisen, wobei die Kabeldurchtrittsöffnungen von Dichtschalen unterschiedlicher Durchmesser gebildet werden, welche wie die Dichtkörper hälftig geteilt sind und zur Anpassung an unterschiedliche Kabeldurchmesser einzeln entfernbar sind. Bei derartigen Kabelmuffen bestehen die Dichtkörper und Dichtschalen regelmäßig aus Kunststoff. Will man eine in Axial- und Umfangsrichtung rutschfeste Kabellagerung unter Berücksichtigung der von den Kabeln ausgehenden Axial- und Torsionsbeanspruchungen erreichen, dann müssen zunächst einmal die Dichtschalen gegeneinander rutschfest und in den sie umgebenden Kabeldurchführungsausnehmungen gelagert sein. Zu diesem Zweck weisen die Kabeldurchführungsausnehmungen und die Dichtschalen innenseitig radiale Arretierungsausnehmungen für die unter Bildung einer Drehsicherung und Axialsicherung in die Arretierungsausnehmungen eingreifenden Arretierungsnasen auf (vgl. DE-GM 91 07 914). Darüber hinaus muß aber auch das betreffende Kabel selbst unter Berücksichtigung der auftretenden Axial- und Torsionsbeanspruchungen zwischen den die jeweilige Kabeldurchtrittsöffnung bildenden Dichtschalen rutschfest gelagert sein. Zwar werden die Kabel mittels umwickelter Dichtungsbänder in die dem jeweiligen Kabeldurchmesser entsprechenden Dichtschalen eingesetzt, um eben eine Dichtung zwischen Kabel und Kabeldurchtrittsöffnung zu verwirklichen, jedoch ist bei hinreichend hohen Axial- und Torsionsbeanspruchungen nicht ausgeschlossen, daß eine Relativbewegung zwischen dem umwickelten Dichtungsband und dem jeweiligen Kabel auftritt. - Hier will die Erfindung Abhilfe schaffen.

Der Erfindung liegt die Aufgabe zugrunde, ein Dichtungsband zum Umwickeln eines durch eine Kabeldurchtrittsöffnung hindurchzuführenden Kabels, insbesondere Fernmeldekabels o. dgl. Rundmaterial, der eingangs beschriebenen Art zu schaffen, welches sich durch erhöhte Griffigkeit auszeichnet und jede Relativbewegung zwischen dem als Dichtung funktionierenden umwickelten Dichtungsband und dem betreffenden Kabel in einfacher und funktionsgerechter Weise ausschließt.

Diese Aufgabe löst die Erfindung bei einem gattungsgemäßen Dichtungsband dadurch, daß zumindest die dem Kabel zugewandte Bandinnenseite eine aufgerauhte Oberfläche aufweist. Nach bevorzugter Ausführungsform der Erfindung ist die aufgerauhte Oberfläche durch vorkragende Reibkörper gebildet. Diese Maßnahmen der Erfindung haben zur Folge, daß sich das erfindungsgemäße Dichtungsband auf seiner dem Kabel zugewandten Bandinnenseite durch erhöhte Griffigkeit auszeichnet, so daß ein hinreichender Reibungsschluß nicht nur zwischen Kabel und Dichtungsschalen bzw. der Kabeldurchtrittsöffnung, sondern insbesondere auch zwischen dem Dichtungsband und dem Kabel erreicht wird. Dadurch ist eine rutschfeste Kabellagerung gewährleistet und treten selbst unter Berücksichtigung der angreifenden Axial- und Torsionsbeanspruchungen Relativbewegungen zwischen Dichtungsband und Kabel nicht länger auf.

Weitere erfindungswesentliche Merkmale sind im folgenden aufgeführt. Regelmäßig findet als Dichtungsband ein Klebeband mit zumindest einer Trägerschicht und einer Klebeschicht Verwendung. In diesem Fall sieht die Erfindung vor, daß die Reibkörper aus feinkörnigem Korund oder Schmirgel bestehen und in die Klebeschicht eingebettet sind. Nach einer anderen Ausführungsform der Erfindung, und diesem Vorschlag kommt selbständige Bedeutung zu, ist vorgesehen, daß die Reibkörper als Reibzähne aus Metall oder Kunststoff ausgebildet und in dem Bandmaterial verankert sind. Dadurch wird eine besonders hohe Griffigkeit und folglich Rutschfestigkeit erreicht. Die Reibzähne sind zweckmäßigerweise aus einer dünnen Blecheinlage herausgedrückt, die einwandfrei in dem Dichtungsband verankert ist. Beispielsweise können die Reibzähne unter Kronenbildung - nach Art einer Reibe - aus der Blecheinlage herausgedrückt sein. Vorzugsweise weist die Blecheinlage Durchbrechungen und die Durchbrechungen begrenzende Blechfelder mit den Reibzähnen auf, wobei reibzahnfreie Blechfelder zwischen benachbarten Durchbrechungen Sollbruchstellen aufweisen, so daß die Blecheinlage das Umwickeln des jeweiligen kabels nicht behindert, vielmehr aufgrund der Sollbruchstellen die für ein Dichtungsband hinreichende Anschmiegsamkeit gewährleistet. Das gilt insbesondere dann, wenn die Durchbrechungen und Blechfelder wechselweise in Reihe quer zur Bandlängsrichtung angeordnet und die Blechfelder über die Durchbrechungen voneinander trennende, in Bandlängsrichtung verlaufende Blechstreifen miteinander verbunden sind und daß diese Blechstreifen in den Bereichen zwischen den Durchbrechungen quer zur Bandlängsrichtung und folglich Wickelrichtung verlaufende Sollbruchstellen aufweisen.

Nach einer anderen Ausführungsform der Erfindung mit selbständiger Bedeutung ist vorgesehen, daß die Reibkörper Bestandteil einer hochflexiblen Kunststoffolie sind, welche in das Dichtungsband eingebettet ist. In diesem Fall können die Reibkörper als an der Kunststoffolie angeformte oder ausgeformte Reibkegel, Reibspitzen o. dgl. Reibnocken ausgebildet sein. Jedenfalls bleibt das erfindungsgemäße Dichtungsband mit einer derartigen in das Dichtungsband integrierten Kunststoffolie ebenfalls hinreichend anschmiegsam und kann wie ein herkömmliches Dichtungsband einwandfrei um das betreffende Kabel gewickelt werden. - Endlich sieht die Erfindung vor, daß die Reibkörper bzw. Blecheinlage oder Kunststoffolie mit den Reibkörpern nur im vorderen Wickelbereich des Dichtungsbandes angeordnet sind, wobei der vordere Wickelbereich eine solche Länge aufweist, daß sich das betreffende Kabel zumindest einmal umwickeln läßt.

Im folgenden wird die Erfindung anhand einer lediglich ein Ausführungsbeispiel darstellenden Zeichnung näher erläutert; es zeigen:

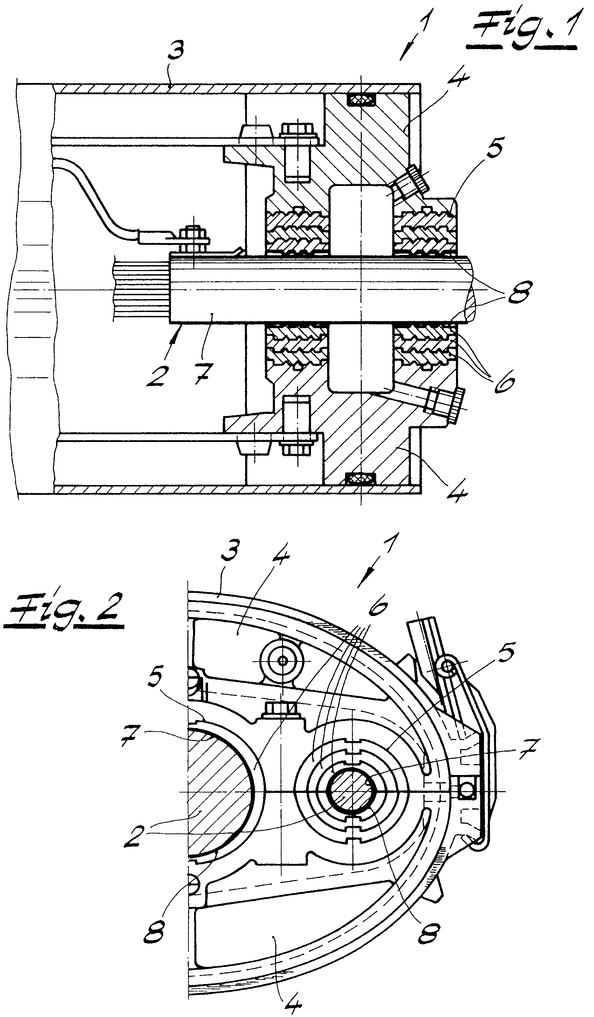

- Fig. 1: eine Kabelmuffe im teilweisen Axialschnitt mit einem hindurchgeführten und von einem erfindungsgemäßen Dichtungsband umwickelten Kabel,
- Fig. 2: eine teilweise Frontansicht auf den Gegenstand nach Fig. 1,

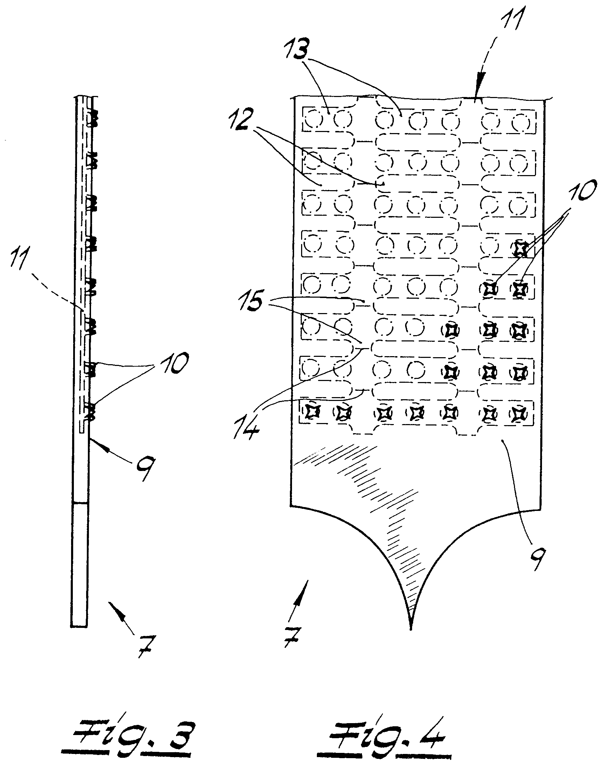

- Fig. 3: einen Ausschnitt aus einem erfindungsgemäßen in Seitenansicht dargestellten Wickelband und
- Fig. 4: eine Ansicht auf die dem Kabel zugewandte Bandinnenseite des Gegenstandes nach Fig. 3.

In den Figuren ist eine Kabelmuffe 1 zum Verbinden und Abzweigen von Kabeln 2, insbesondere Fernmeldekabeln, unterschiedlicher Durchmesser dargestellt. Diese Kabelmuffe 1 weist ein Muffenrohr 3 und in die Stirnseiten des Muffenrohres 3 eingesetzte Dichtkörper 4 mit Kabeldurchführungsausnehmungen 5 auf, wobei die Kabeldurchführungsausnehmungen 5 mit Dichtschalen 6 unterschiedlicher Durchmesser ausgekleidet sind. Die Dichtkörper 4 und die Dichtschalen 6 sind hälftig geteilt. Die Dichtschalen 6 sind zur Anpassung an unterschiedliche Kabeldurchmesser einzeln entfernbar. Die Kabeldurchführungsausnehmungen 5 und die Dichtschalen 6 weisen innenseitig radiale Arretierungsnasen und darüber hinaus die Dichtschalen außenseitig radiale Arretierungsmaßnahmen für die unter Bildung einer Drehsicherung und Axialsicherung in die Arretierungsausnehmungen eingreifenden Arretierungsnasen auf. Das ist im einzelnen nicht dargestellt. Jedes Kabel 2 wird mittels eines Dichtungsbandes 7 umwickelt und in die dem jeweiligen Kabeldurchmesser entsprechende Kabeldurchtrittsöffnung 8 eingesetzt, welche von den jeweiligen Dichtschalen 6 gebildet wird. Auf diese Weise wird zwischen dem Kabel 2 und der Kabeldurchtrittsöffnung 8 eine eingepaßte Dichtung verwirklicht. Zumindest die dem Kabel 2 zugewandte Bandinnenseite weist eine aufgerauhte Oberfläche 9 auf. Die aufgerauhte Oberfläche ist durch vorkragende Reibkörper 10 gebildet. Bei der dargestellten Ausführungsform sind die Reibkörper als Reibzähne 10 aus Metall ausgebildet und in dem Bandmaterial verankert. Dazu sind die Reibzähne 10 aus einer dünnen Blecheinlage 11 herausgedrückt, und zwar unter Kronenbildung herausgedrückt. Die Blecheinlage 11 weist Durchbrechungen 12 und die Durchbrechungen 12 begrenzende Blechfelder 13 mit den Reibzähnen 10 auf, wobei reibzahnfreie Blechfelder zwischen benachbarten Durchbrechungen 12 Sollbuchstellen 14 aufweisen. Nach dem Ausführungsbeispiel sind die Durchbrechungen 12 und Blechfelder 13 wechselweise in Reihe quer zur Bandlängsrichtung und folglich quer zur Wickelrichtung angeordnet, wobei die Blechfelder 13 über die Durchbrechungen 12 voneinander trennende in Bandlängsrichtung verlaufende Blechstreifen 15 miteinander verbunden sind. Diese Blechstreifen 15 weisen in den Bereichen zwischen den Durchbrechungen 12 quer zur Bandlängsrichtung und folglich quer zur Wickelrichtung verlaufende Sollbruchstellen 14 auf, so daß die Blecheinlage 11 beim Umwickeln eines Kabels 2 nicht stört. Es genügt, wenn die Blecheinlage 11 bzw. die Reibkörper 10 nur im vorderen Wickelbereich, dessen Länge zumindest dem Kabelumfang entspricht, des Dichtungsbandes 7 angeordnet sind. Jedenfalls sorgen die Reibkörper 10 für eine rutschfeste Kabellagerung, und zwar insbesondere unter Berücksichtigung der üblicherweise angreifenden Axial- und Torsionsbeanspruchungen.

## Patentansprüche

1. Dichtungsband zum Umwickeln eines durch eine Kabeldurchtrittsöffnung hindurchzuführenden Kabels, insbesondere Fernmeldekabels o. dgl. Rundmaterial, zur Bildung einer zwischen dem Kabel und der Kabeldurchtrittsöffnung einzupassenden Dichtung, **dadurch gekennzeichnet,** daß zumindest die dem Kabel (2) zugewandte Bandinnenseite eine aufgerauhte Oberfläche (9) aufweist.

2. Dichtungsband nach Anspruch 1, dadurch gekennzeichnet, daß die aufgerauhte Oberfläche durch vorkragende Reibkörper (10) gebildet ist.

3. Dichtungsband in der Ausführungsform als Klebeband mit zumindest einer Trägerschicht und einer Klebeschicht, dadurch gekennzeichnet, daß die Reibkörper (10) aus feinkörnigem Korund oder Schmirgel bestehen und in die Klebeschicht eingebettet sind.

4. Dichtungsband nach Anspruch 1 oder 2, dadurch gekennzeichnet, daß die Reibkörper als Reibzähne (10) aus Metall oder Kunststoff ausgebildet und in dem Bandmaterial verankert sind.

5. Dichtungsband nach einem der Ansprüche 1, 2 oder 4, dadurch gekennzeichnet, daß die Reibzähne (10) aus einer dünnen Blecheinlage (11) herausgedrückt sind.

6. Dichtungsband nach einem der Ansprüche 1, 2 oder 4, 5, dadurch gekennzeichnet, daß die Reibzähne (10) unter Kronenbildung aus der Blecheinlage (11) herausgedrückt sind.

7. Dichtungsband nach einem der Ansprüche 1, 2 oder 4 bis 6, dadurch gekennzeichnet, daß die Blecheinlage (11) Durchbrechungen (12) und die Durchbrechungen (12) begrenzende Blechfelder (13) mit den Reibzähnen (10) aufweist, wobei reibzahnfreie Blechfelder zwischen benachbarten Durchbrechungen (12) Sollbruchstellen (14) aufweisen.

8. Dichtungsband nach einem der Ansprüche 1, 2 oder 4 bis 7, dadurch gekennzeichnet, daß die Durchbrechungen (12) und Blechfelder (13) wechselweise in Reihe quer zur Bandlängsrichtung angeordnet und die Blechfelder (13) über die Durchbrechungen (12) voneinander trennende in Bandlängsrichtung verlaufende Blechstreifen (15) miteinander verbunden sind, und daß diese Blechstreifen (15) in den Bereichen zwischen den Durchbrechungen (12) quer zur Bandlängsrichtung verlaufende Sollbruchstellen (14) aufweisen.

9. Dichtungsband nach Anspruch 1 oder 2, dadurch gekennzeichnet, daß die Reibkörper (10) Bestandteil einer hochflexiblen Kunststoffolie sind, welche in das Dichtungsband (7) eingebettet ist.

10. Dichtungsband nach einem der Ansprüche 1, 2 oder 9, dadurch gekennzeichnet, daß die Reibkörper (10) als an der Kunststoffolie angeformte oder ausgeformte Reibkegel, Reibspitzen oder Reibnocken ausgebildet sind.

11. Dichtungsband nach einem der Ansprüche 1 bis 10, dadurch gekennzeichnet, daß die Reibkörper (10) nur im vorderen Wickelbereich, dessen Länge zumindest dem jeweiligen Kabelumfang entspricht, angeordnet sind.
